# EUROPÄISCHE PATENTSCHRIFT

(11) **EP 2 749 483 B1**
(45) Veröffentlichungstag und Bekanntmachung des Hinweises auf die Patenterteilung: **21.09.2016**
(21) Anmeldenummer: 13193685.8
(22) Anmeldetag: 20.11.2013
(51) Int. Cl.: B62K 23/06, B62L 3/02

(54) **Fahrzeugbremseinheit**
Brake assembly for a vehicle
Unité de freinage de véhicule

(30) Priorität: 27.12.2012 DE 102012224382
(43) Veröffentlichungstag der Anmeldung: 02.07.2014
(73) Patentinhaber: Robert Bosch GmbH, 70442 Stuttgart (DE)
(72) Erfinder: Dukart, Anton, 70839 Gerlingen (DE); Ewert, Andreas, 77839 Lichtenau (DE); Schlegel, Jan, 70563 Stuttgart (DE); Kuhnen, Klaus, 66128 Saarbruecken (DE)

(56) Entgegenhaltungen:
- DE-A1- 19 848 186
- DE-A1-102004 031 454
- DE-A1-102006 031 855
- DE-A1-102010 060 879
- JP-A- S59 164 424

## Beschreibung

### Stand der Technik

In der JPS59164427 ist bereits eine Fahrzeugbremseinheit, insbesondere eine Zweiradbremseinheit, die zumindest eine Bremseinstelleinheit aufweist, die dazu vorgesehen ist, eine Bremswirkung gezielt einzustellen, mit den Merkmalen des Oberbegriffes des Anspruchs 1, vorgeschlagen worden.

### Offenbarung der Erfindung

Die Erfindung geht aus von einer Fahrzeugbremseinheit gemäß Anspruch 1, insbesondere einer Zweiradbremseinheit, die zumindest eine Bremseinstelleinheit aufweist, die dazu vorgesehen ist, eine Bremswirkung gezielt einzustellen.

Es wird vorgeschlagen, dass die Bremseinstelleinheit zumindest ein Bremselement aufweist, das dazu vorgesehen ist, durch zumindest eine Materialeigenschaftsänderung zumindest einen Beitrag zu einer Einstellung, der Bremswirkung zu bewirken. Unter einer "Bremseinstelleinheit" soll insbesondere eine Einheit verstanden werden, die dazu vorgesehen ist, die Bremswirkung gezielt, vorzugsweise planmäßig, insbesondere bewusst, einzustellen. Insbesondere umfasst die Bremseinstelleinheit zumindest eine Einstelleinheit. Unter einer "Einstelleinheit" soll insbesondere eine Einheit mit einer Prozessoreinheit und mit einer Speichereinheit sowie mit einem in der Speichereinheit gespeicherten Betriebsprogramm verstanden werden. Grundsätzlich kann die Bremseinstelleinheit mehrere untereinander verbundene Einstelleinheiten aufweisen, die vorzugsweise dazu vorgesehen sind, über ein Bus-System, wie insbesondere ein CAN-Bus-System, miteinander zu kommunizieren. Insbesondere umfasst die Einstelleinheit zumindest eine Steuereinheit und/oder zumindest eine Regeleinheit. Unter einer "Steuereinheit" soll insbesondere eine Einheit verstanden werden, die dazu vorgesehen ist, einmalig die Bremswirkung zu beeinflussen und anschließend in dem beeinflussten Zustand zu halten. Unter einer "Regeteinheit" soll insbesondere eine Einheit verstanden werden, die dazu vorgesehen ist, einmalig die Bremswirkung zu beeinflussen, anschließend zu prüfen, ob die beeinflusste Bremswirkung eine gewünschte Wirkung erzielt und entsprechend einem Ergebnis der Prüfung die Bremswirkung erneut zu beeinflussen. Insbesondere ist die Regeleinheit dazu vorgesehen, die Bremswirkung in einem kontinuierlich andauernden Regelkreislauf zu regeln, insbesondere zu überwachen. Unter der Wendung, dass die Bremseinstelleinheit dazu vorgesehen ist, die Bremswirkung "gezielt" einzustellen, soll insbesondere verstanden werden, dass die Bremseinstelleinheit dazu vorgesehen ist, die Bremswirkung, vorzugsweise planmäßig, insbesondere bewusst, in eine bestimmte Richtung einzustellen, vorzugsweise zu beeinflussen, insbesondere zu regeln. Unter einem "Bremselement" soll insbesondere ein Element der Bremseinstelleinheit verstanden werden, das dazu vorgesehen ist, von der Bremseinstelleinheit eingestellt zu werden. Insbesondere ist das Bremselement dazu vorgesehen, durch die Materialeigenschaftsänderung den Beitrag zu der Einstellung der Bremswirkung zu bewirken. Beispielsweise ist das Bremselement zu einer Reduzierung eines Widerstands gegen eine, vorzugsweise von einem Fahrzeugführer ausgeübte, Bremskraft um mehr als 20 %, vorzugsweise um mehr als 40 % und insbesondere um mehr als 70 % vorgesehen. Insbesondere ist das Bremselement zu einer Erhöhung des Widerstands gegen die, vorzugsweise von dem Fahrzeugführer ausgeübte, Bremskraft um mehr als 20 %, vorzugsweise um mehr als 40 % und insbesondere um mehr als 70 % vorgesehen. Vorzugsweise ist das Bremselement zu einer Erzeugung einer Gegenkraft vorgesehen, welche entgegen der Bremskraft ausgerichtet ist und einen Betrag von mehr als 10 N, vorzugsweise von mehr als 20 N und insbesondere von mehr als 40 N aufweist. Insbesondere ist der Beitrag als eine Gegenkraft ausgebildet. Unter einer "Materialeigenschaftsänderung" eines Elements, insbesondere des Bremselements, soll insbesondere eine Änderung zumindest eines physikalischen und/oder chemischen und/oder geometrischen Parameters verstanden werden. Beispielsweise ist der Parameter als eine Dichte, ein Brechungsindex, eine Gitter-struktur und/oder eine Geometrie ausgebildet. Ebenfalls denkbar sind weitere, einem Fachmann als sinnvoll erscheinende Parameter. Durch eine erfindungsgemäße Ausgestaltung kann vorteilhaft eine gezielte Einstellung der Bremswirkung erreicht und damit eine Sicherheit für einen Fahrzeugführer eines die Fahrzeugbremseinheit umfassenden Fahrzeugs erhöht werden.

Ferner wird vorgeschlagen, dass die Bremseinstelleinheit zumindest eine Betätigungseinheit aufweist, die dazu vorgesehen ist, die Bremswirkung zumindest teilweise selbsttätig abhängig von zumindest einer Kenngröße einzustellen. Beispielsweise ist denkbar, dass die Betätigungseinheit zumindest einen Regensensor aufweist und dazu vorgesehen ist, bei Regen die Bremswirkung einzustellen. Insbesondere weist die Betätigungseinheit zumindest eine Radsensoreinheit auf, die dazu vorgesehen ist, zumindest eine Drehzahl eines Rads, vorzugsweise eines Rads zumindest eines die Fahrzeugbremseinheit aufweisenden Fahrzeugs, zu messen. Vorzugsweise ist die Betätigungseinheit dazu vorgesehen, mittels der Radsensoreinheit zumindest einen Schlupf des Rads zu bestimmen. Insbesondere ist die Betätigungseinheit dazu vorgesehen, anhand des Schlupfs ein Blockieren des Rads zu erkennen. Vorzugsweise ist die Kenngröße als das Blockieren des Rads ausgebildet. Unter der Wendung, dass die Betätigungseinheit dazu vorgesehen ist, die Bremswirkung "selbsttätig" abhängig von der Kenngröße einzustellen, soll insbesondere verstanden werden, dass die Betätigungseinheit dazu vorgesehen ist, die Bremswirkung von sich aus abhängig von der Kenngröße einzustellen. Insbesondere ist die Betätigungseinheit dazu vorgesehen, die Bremswirkung unter Vermeidung einer Variation der, vorzugsweise von dem Fahrzeugführer ausgeübten, Bremskraft einzustellen. Unter der Wendung, dass die Betätigungseinheit dazu vorgesehen ist, die Bremswirkung "zumindest teilweise selbsttätig" abhängig von der Kenngröße einzustellen, soll insbesondere verstanden werden, dass die Betätigungseinheit dazu vorgesehen ist, bei Auftreten der, vorzugsweise von dem Fahrzeugführer ausgeübten, Bremskraft die Bremswirkung von sich aus abhängig von der Kenngröße einzustellen. Durch eine erfindungsgemäße Ausgestaltung kann vorteilhaft die Bremswirkung unabhängig von äußeren Einflüssen, insbesondere unabhängig von der von dem Fahrzeugführer erzeugten Bremskraft, sicher und effektiv eingestellt werden.

Zudem wird vorgeschlagen, dass die Materialeigenschaftsänderung des Bremselements zumindest als eine Steifigkeitsänderung ausgebildet ist. Insbesondere ist die Materialeigenschaftsänderung des Bremselements zumindest als eine Schersteifigkeitsänderung ausgebildet. Beispielsweise ist denkbar, dass das Bremselement dazu vorgesehen ist, durch ein Weicherstellen des Bremselements eine Reduzierung eines Widerstands gegen die Bremskraft um mehr als 20 %, vorzugsweise um mehr als 40 % und insbesondere um mehr als 70 % zu ermöglichen. Dabei ist das Bremselement als ein Bremsbelag ausgebildet und insbesondere in einem Bereich eines Rads eines Fahrzeugs angeordnet. Insbesondere ist das Bremselement dazu vorgesehen, durch ein Härterstellen des Bremselements eine Erhöhung des Widerstands gegen die Bremskraft um mehr als 20 %, vorzugsweise um mehr als 40 % und insbesondere um mehr als 70 % zu ermöglichen. Vorzugsweise ist das Bremselement dazu vorgesehen, eine Gegenkraft zu erzeugen, die entgegen der Bremskraft gerichtet ist. Insbesondere ist das Bremselement in einem Bereich zu einer Erzeugung der Bremskraft angeordnet. Vorzugsweise ist der Bereich zu der Erzeugung der Bremskraft als ein Bremshebel und/oder als ein Bremspedal ausgebildet. Insbesondere ist das Bremselement in einem Bereich einer Handbremsbetätigungseinheit, die zu der Erzeugung der Bremskraft vorgesehen ist, angeordnet. Unter einer "Steifigkeit" des Materials soll insbesondere eine Eigenschaft des Materials, insbesondere des Bremselements, verstanden werden, die einen Widerstand des Materials gegen Verformung beschreibt. Insbesondere ist die Steifigkeit als ein Widerstand gegen eine durch zumindest einen, vorzugsweise äußeren, Reiz aufgebrachte Verformung ausgebildet. Vorzugsweise ist der Reiz als eine Kraft und/oder als ein Drehmoment ausgebildet. Durch eine erfindungsgemäße Ausgestaltung kann vorteilhaft eine Wirkung der Bremskraft gezielt beeinflusst und damit die Bremswirkung in einer sicheren, zuverlässigen Weise eingestellt werden.

Weiterhin wird vorgeschlagen, dass die Bremseinstelleinheit zumindest eine Felderzeugungseinheit aufweist, die dazu vorgesehen ist, zumindest ein Feld zu einer Erreichung der Materialeigenschaftsänderung des Bremselements zu erzeugen. Unter einer "Felderzeugungseinheit" soll insbesondere eine Einheit verstanden werden, die dazu vorgesehen ist, ein inneres und/oder ein äußeres Feld zu erzeugen. Insbesondere ist die Felderzeugungseinheit dazu vorgesehen, mittels des Felds zumindest ein Element, insbesondere das Bremselement, gezielt, vorzugsweise planmäßig, insbesondere bewusst, zu beeinflussen. Unter einem "inneren Feld" soll insbesondere ein Feld innerhalb des Elements verstanden werden. Unter einem "äußeren Feld" soll insbesondere ein Feld außerhalb des Elements verstanden werden. Insbesondere ist die Felderzeugungseinheit dazu vorgesehen, das äußere Feld außerhalb des Elements zu erzeugen. Durch eine erfindungsgemäße Ausgestaltung kann vorteilhaft die Materialeigenschaftsänderung des Bremselements durch ein Feld erzeugt werden, wodurch eine gezielte, sichere Einstellung der Materialeigenschaftsänderung des Bremselements ermöglicht werden kann.

Ferner wird vorgeschlagen, dass das Feld als ein magnetisches Feld ausgebildet ist. Alternativ und/oder zusätzlich ist denkbar, dass das Feld als ein elektrisches Feld ausgebildet ist. Durch eine erfindungsgemäße Ausgestaltung kann vorteilhaft eine magnetische Eigenschaft des Bremselements gezielt zu einer sicheren Einstellung der Materialeigenschaftsänderung des Bremselements ausgenutzt werden.

Zudem wird vorgeschlagen, dass das Bremselement zumindest ein magneto-rheologisches Material umfasst. Alternativ und/oder zusätzlich ist denkbar, dass das Bremselement zumindest ein elektro-rheologisches Material umfasst. Unter der Wendung, dass das Bremselement zumindest ein magneto-rheologisches Material umfasst, soll insbesondere verstanden werden, dass das Bremselement zu einem Massenanteil und/oder zu einem Volumenanteil von mehr als 70 %, vorzugsweise von mehr als 80 % und insbesondere von mehr als 90 % aus dem magneto-rheologischen Material ausgebildet ist. Unter einem "magneto-rheologischen Material" soll insbesondere eine Suspension von magnetischen Partikeln, vorzugsweise mit einer Größe in einem Bereich von einigen µm, in einem Träger verstanden werden. Insbesondere ist das magneto-rheologische Material dazu vorgesehen, zumindest eine, vorzugsweise rheologische, Materialeigenschaft bei Anlegen eines magnetischen Felds von weniger als 0,1 T, vorzugsweise von weniger als 0,01 T und insbesondere von weniger als 0,001 T, vorzugsweise rasch, insbesondere reversibel, zu verändern. Vorzugsweise ist eine Änderung der Materialeigenschaft durch eine Variation des Felds beeinflussbar. Insbesondere ist die Änderung der Materialeigenschaft proportional zu einer Stärke des angelegten Felds. Vorzugsweise sind bei Anlegen des Felds Materialeigenschaftsänderungen von mehreren hundert Prozent erreichbar. Insbesondere ist das magneto-rheologische Material dazu vorgesehen, nach Abschalten des angelegten Felds in seinen Ausgangszustand, insbesondere in seinen Zustand vor Anlegen des Felds, vorzugsweise rasch, zurückzukehren. Vorzugsweise ist die Materialeigenschaft als eine Form und/oder als eine Steifigkeit, vorzugsweise als eine Schersteifigkeit, des magneto-rheologischen Materials ausgebildet. Insbesondere sind die Partikel zu einem Volumenanteil zwischen 5 % und 50 % eines Gesamtvolumens des magnetorheologischen Materials in dem Träger dispergiert. Vorzugsweise sind die Partikel als ferromagnetische und/oder paramagnetische Partikel ausgebildet. Beispielsweise sind die Partikel als Eisen, Eisenoxid, Eisennitrid, Eisencarbid, Carbonyleisen, Nickel, Kobalt, Chromoxid und/oder eine Kombination zumindest eines der vorgenannten Materialien mit zumindest einem weiteren Material ausgebildet. Beispielsweise ist der Träger als Polyalphaolefine, Naturkautschuk, Silikon, Polybutadien, Polyethylen, Polyisopren und/oder eine Kombination zumindest eines der vorgenannten Materialien mit zumindest einem weiteren Element ausgebildet. Unter einer "Suspension" soll insbesondere ein, vorzugsweise heterogenes, Stoffgemisch aus zumindest einem Trägermaterial und in dem Trägermaterial verteilten Partikeln, vorzugsweise mit einer Partikelgröße von weniger als 100 µm, vorzugsweise von weniger als 50 µm und insbesondere von weniger als 10 µm, verstanden werden. Beispielsweise ist das Trägermaterial als eine Flüssigkeit oder ein Festkörper ausgebildet. Unter "rasch" soll insbesondere eine Zeitspanne von wenigen Millisekunden verstanden werden. Unter einem "elektro-rheologischen Material" soll insbesondere eine Suspension von elektrischen Partikeln, vorzugsweise mit einer Größe in einem Bereich von einigen µm, in einem Träger verstanden werden. Insbesondere ist das elektro-rheologische Material dazu vorgesehen, zumindest eine, vorzugsweise rheologische, Materialeigenschaft bei Anlegen eines elektrischen Felds von weniger als 200 V/m, vorzugsweise von weniger als 100 V/m und insbesondere von weniger als 50 V/m, vorzugsweise rasch, insbesondere reversibel, zu verändern. Vorzugsweise ist eine Änderung der Materialeigenschaft durch eine Variation des Felds beeinflussbar. Insbesondere ist die Änderung der Materialeigenschaft proportional zu einer Stärke des angelegten Felds. Vorzugsweise sind bei Anlegen des Felds Materialeigenschaftsänderungen von mehreren zehn Prozent erreichbar. Insbesondere ist das elektro-rheologische Material dazu vorgesehen, nach Abschalten des angelegten Felds in seinen Ausgangszustand, insbesondere in seinen Zustand vor Anlegen des Felds, vorzugsweise rasch, zurückzukehren. Vorzugsweise ist die Materialeigenschaft als eine Form und/oder als eine Steifigkeit, vorzugsweise als eine Schersteifigkeit, des elektro-rheologischen Materials ausgebildet. Insbesondere sind die Partikel zu einem Volumenanteil zwischen 5 % und 50 % eines Gesamtvolumens des elektro-rheologischen Materials in dem Träger dispergiert. Durch eine erfindungsgemäße Ausgestaltung kann vorteilhaft das Bremselement ein Material umfassen, das in einer einfachen Weise gezielt beeinflussbar ist und auf die Beeinflussung vorhersagbar reagiert. Dadurch kann vorteilhaft eine Sicherheit der Fahrzeugbremseinheit weiter erhöht werden.

Weiterhin wird vorgeschlagen, dass das magneto-rheologische Material zumindest ein magneto-rheologisches Elastomer umfasst. Alternativ oder zusätzlich ist denkbar, dass das elektro-rheologische Material zumindest ein elektro-rheologisches Elastomer umfasst. Unter einem "magneto-rheologischen Elastomer" soll insbesondere ein magneto-rheologisches Material verstanden werden, bei welchem der Träger als ein Elastomer ausgebildet ist. Unter einem "elektro-rheologischen Elastomer" soll insbesondere ein elektro-rheologisches Material verstanden werden, bei welchem der Träger als ein Elastomer ausgebildet ist. Durch eine erfindungsgemäße Ausgestaltung kann vorteilhaft eine spezielle, für vorliegende Bedürfnisse besonders gut geeignete Form des magneto-rheologischen Materials verwendet werden.

Ferner wird vorgeschlagen, dass die Fahrzeugbremseinheit zumindest eine Bremseinheit, die als eine Scheibenbremse ausgebildet ist, aufweist. Durch eine erfindungsgemäße Ausgestaltung kann vorteilhaft eine langlebige Bremseinheit erreicht werden. Zudem kann durch eine Ausbildung der Bremseinheit als Scheibenbremse eine Bremswirkung erhöht und damit ein sicheres, schnelleres Abbremsen gewährleistet werden.

Zudem wird ein Fahrzeug, insbesondere ein Zweirad, mit zumindest einer erfindungsgemäßen Fahrzeugbremseinheit vorgeschlagen. Durch eine erfindungsgemäße Ausgestaltung kann vorteilhaft ein Fahrzeug mit der erfindungsgemäßen Fahrzeugbremseinheit ausgestattet werden, wodurch ein sicheres Fahrzeug erreicht werden kann.

Weiterhin wird vorgeschlagen, dass das Fahrzeug eine Ausbildung als Fahrrad umfasst. Alternativ ist denkbar, dass das Fahrzeug eine Ausbildung als Motorrad umfasst. Durch eine erfindungsgemäße Ausgestaltung kann vorteilhaft ein Fahrrad mit einer besonders zuverlässigen, sicheren Fahrzeugbremseinheit erreicht werden.

Ferner wird ein Verfahren gemäß Anspruch 11 zu einem Betreiben zumindest einer erfindungsgemäßen Fahrzeugbremseinheit, bei dem das Bremselement der Bremseinstelleinheit durch zumindest eine Materialeigenschaftsänderung zumindest einen Beitrag zu einer Einstellung der Bremswirkung bewirkt, vorgeschlagen. Durch eine erfindungsgemäße Ausgestaltung kann vorteilhaft die erfindungsgemäße Fahrzeugbremseinheit in einer korrekten, sicheren, reproduzierbaren Weise betrieben werden und damit eine Sicherheit weiter erhöht werden.

Die erfindungsgemäße Fahrzeugbremseinheit soll hierbei nicht auf die oben beschriebene Anwendung und Ausführungsform beschränkt sein. Insbesondere kann die erfindungsgemäße Fahrzeugbremseinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Fahrzeug mit einer erfindungsgemäßen Fahrzeugbremseinheit in einer schematischen Darstellung und
- Fig. 2: einen Ausschnitt der erfindungsgemäßen Fahrzeugbremseinheit aus Fig. 1 in einer stark vergrößerten Schnittdarstellung.

### Beschreibung des Ausführungsbeispiels

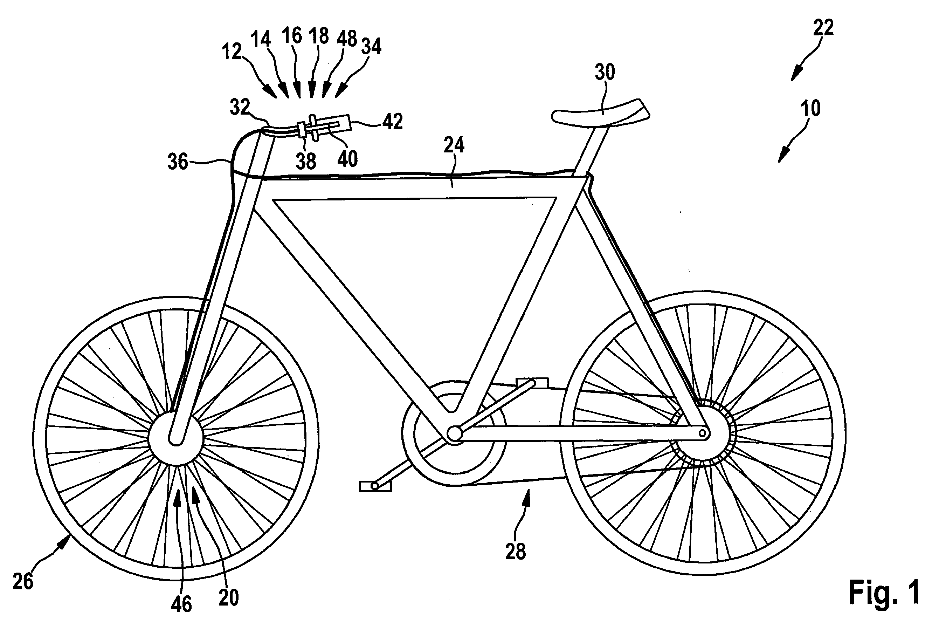

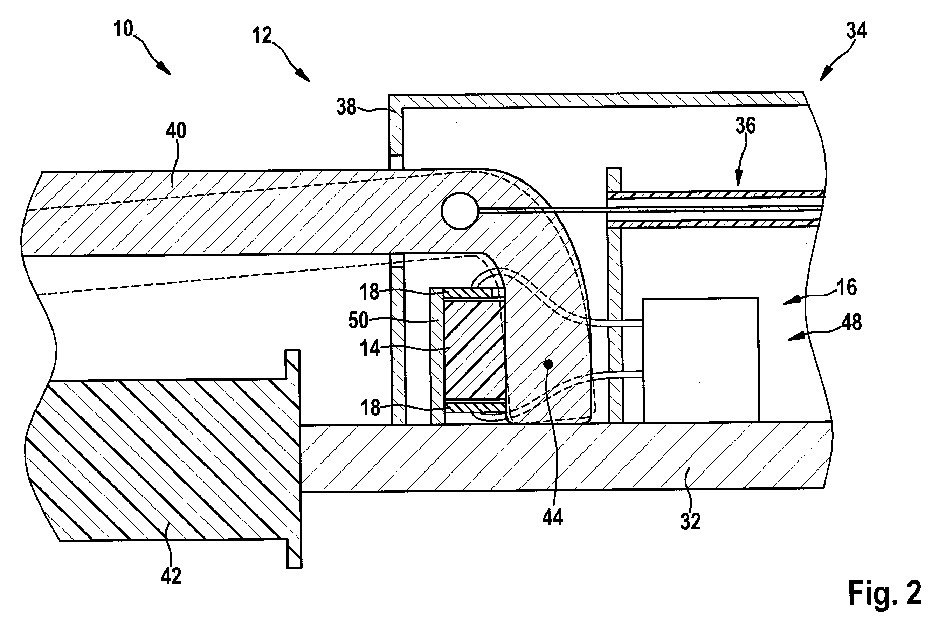

Fig. 1 zeigt ein erfindungsgemäßes Fahrzeug 22 mit einer erfindungsgemäßen Fahrzeugbremseinheit 10 in einer schematischen Darstellung. Im Folgenden wird lediglich auf für die vorliegende Erfindung wesentliche Merkmale detailliert eingegangen. Das Fahrzeug 22 ist als ein Zweirad ausgebildet. Im vorliegenden Ausführungsbeispiel ist das Fahrzeug 22 gekennzeichnet durch eine Ausbildung als Fahrrad. Das Fahrzeug 22 umfasst einen Fahrzeugrahmen 24. Zudem umfasst das Fahrzeug 22 zwei Räder 26, die jeweils an dem Fahrzeugrahmen 24 befestigt sind. Im Folgenden wird lediglich eines der Räder 26 beschrieben und mit Bezugszeichen versehen. Analog hierzu beziehen sich im Folgenden mit dem Rad 26 in Verbindung stehende Merkmale gleichfalls auf das weitere Rad 26. Das Fahrzeug 22 weist eine Antriebseinheit 28 auf, mittels der das Fahrzeug 22 antreibbar ist. Die Antriebseinheit 28 ist dazu vorgesehen, von einem Fahrzeugführer (nicht dargestellt) angetrieben zu werden. Mittels einer von dem Fahrzeugführer auf die Antriebseinheit 28 aufgebrachten Energie ist das Fahrzeug 22 bewegbar. Das Fahrzeug 22 weist einen Fahrzeugsattel 30 auf, der an dem Fahrzeugrahmen 24 befestigt ist. Der Fahrzeugsattel 30 ist als eine Sitzgelegenheit für den Fahrzeugführer vorgesehen. Das Fahrzeug 22 umfasst einen Fahrzeuglenker 32, der an dem Fahrzeugrahmen 24 befestigt ist. Weiterhin weist das Fahrzeug 22 zwei Handgriffe 42 auf, die an dem Fahrzeuglenker 32 angebracht sind. Von den beiden Handgriffen 42 in Fig. 1 und Fig. 2 ist lediglich einer dargestellt. Im Folgenden wird lediglich einer der beiden Handgriffe 42 beschrieben.

Das Fahrzeug 22 umfasst die Fahrzeugbremseinheit 10, die eine Bremseinstelleinheit 12 aufweist, die dazu vorgesehen ist, eine Bremswirkung gezielt einzustellen. Die Fahrzeugbremseinheit 10 ist als eine Zweiradbremseinheit ausgebildet. Ausgestattet ist die Fahrzeugbremseinheit 10 mit einer Bremseinheit 20, die als eine Scheibenbremse ausgebildet ist. Die Bremseinheit 20 ist an einer Anlenkstelle des Rads 26 an dem Fahrzeugrahmen 24 angeordnet. Die Fahrzeugbremseinheit 10 umfasst zwei Bremshebeleinheiten 34, die zu einer Betätigung der Bremseinheit 20 vorgesehen sind. Von den Bremshebeleinheiten 34 ist in Fig. 1 und Fig. 2 jeweils lediglich eine dargestellt. Im Folgenden wird lediglich eine der beiden Bremshebeleinheiten 34 beschrieben. Die Bremshebeleinheit 34 ist mittels einer Bremsleitung 36 mit der Bremseinheit 20 verbunden. Die Fahrzeugbremseinheit 10 umfasst die Bremsleitung 36. Die Bremsleitung 36 weist einen Bremsleitungszug sowie eine Bremsleitungszugummantelung auf (vgl. Fig. 2). Die Bremsleitungszugummantelung ist dazu vorgesehen, den Bremsleitungszug vor äußeren Einflüssen schützend zu lagern. Der Bremsleitungszug ist zu einer Übertragung einer Bremskraft von der Bremshebeleinheit 34 an die Bremseinheit 20 vorgesehen.

Die Bremshebeleinheit 34 weist ein Bremshebeleinheitengehäuse 38 auf. Zudem weist die Bremshebeleinheit 34 ein Bremshebelelement 40 auf, das um eine Schwenkachse 44 schwenkbar an dem Bremshebeleinheitengehäuse 38 gelagert ist. In einem Bereich, in welchem das Bremshebelelement 40 das Bremshebeleinheitengehäuse 38 durchquert, weist das Bremshebeleinheitengehäuse 38 eine Bremshebelaussparung auf, die sowohl an einer dem Fahrzeuglenker 32 zuweisenden Seite als auch an einer dem Fahrzeuglenker 32 abweisenden Seite des Bremshebelelements 40 angeordnet ist. Dadurch ist das Bremshebelelement 40 problemlos um die Schwenkachse 44 schwenkbar. Das Bremshebelelement 40 ist zu einer Betätigung durch den Fahrzeugführer vorgesehen. Das Bremshebelelement 40 ist dazu vorgesehen, die durch die Betätigung ausgeübte und auf das Bremshebelelement 40 einwirkende Bremskraft an die Bremseinheit 20 zu übertragen. Und zwar ist das Bremshebelelement 40 dazu vorgesehen, die durch die Betätigung ausgeübte und auf das Bremshebelelement 40 einwirkende Bremskraft mittels der Bremsleitung 36 an die Bremseinheit 20 zu übertragen. Das Bremshebelelement 40 ist dazu vorgesehen, bei der Betätigung mit einem dem Bremshebeleinheitengehäuse 38 abweisenden Ende um die Schwenkachse 44 in Richtung des Handgriffs 42 verschwenkt zu werden.

Die Bremseinstelleinheit 12 weist eine Betätigungseinheit 16 auf, die dazu vorgesehen ist, die Bremswirkung teilweise selbsttätig abhängig von einer Kenngröße einzustellen. Die Betätigungseinheit 16 weist eine Radsensoreinheit 46 auf, die dazu vorgesehen ist, eine Drehzahl des Rads 26 zu messen. Im vorliegenden Ausführungsbeispiel ist die Radsensoreinheit 46 an der Bremseinheit 20 angeordnet. Die Betätigungseinheit 16 ist dazu vorgesehen, mittels der Radsensoreinheit 46 einen Schlupf des Rads 26 zu bestimmen. Die Betätigungseinheit 16 ist dazu vorgesehen, anhand des Schlupfs ein Blockieren des Rads 26 zu erkennen. Vorzugsweise ist die Kenngröße als das Blockieren des Rads 26 ausgebildet. Die Radsensoreinheit 46 ist dazu vorgesehen, die gemessenen Daten drahtlos an die Betätigungseinheit 16 zu übermitteln. Die Bremseinstelleinheit 12 umfasst eine Regeleinheit 48, die dazu vorgesehen ist, die Bremswirkung in einem kontinuierlich andauernden Regelkreislauf gezielt zu regeln.

Fig. 2 zeigt einen Ausschnitt der erfindungsgemäßen Fahrzeugbremseinheit 10 aus Fig. 1 in einer stark vergrößerten Schnittdarstellung. Die Bremseinstelleinheit 12 weist ein Bremselement 14 auf, das dazu vorgesehen ist, durch eine Materialeigenschaftsänderung einen Beitrag zu einer Einstellung der Bremswirkung zu bewirken. Das Bremselement 14 ist zu einer Erzeugung einer Gegenkraft, die entgegen der Bremskraft gerichtet ist, vorgesehen. Der Beitrag ist als die Gegenkraft ausgebildet. Die Materialeigenschaftsänderung des Bremselements 14 ist als eine Steifigkeitsänderung ausgebildet. Im vorliegenden Ausführungsbeispiel ist das Bremselement 14 in dem Bremshebeleinheitengehäuse 38 angeordnet. Und zwar ist das Bremselement 14 an einer Wandung des Bremshebeleinheitengehäuses 38 angeordnet. Mit einer der Wandung des Bremshebeleinheitengehäuses 38 abweisenden Seite ist das Bremselement 14 in einem direkten Kontakt mit dem Bremshebelelement 40. Das Bremselement 14 ist in einem kraftlosen Zustand der Fahrzeugbremseinheit 10 in einem entspannten Zustand zwischen dem Bremshebeleinheitengehäuse 38 sowie dem Bremshebelelement 40 angeordnet. Der kraftlose Zustand ist definiert als eine Abwesenheit äußerer, auf die Fahrzeugbremseinheit 10 einwirkender Kräfte, vor allem als eine Abwesenheit der Bremskraft.

Das Bremselement 14 umfasst ein magneto-rheologisches Material. Das Bremselement 14 ist dazu vorgesehen, mittels eines äußeren Reizes die Materialeigenschaftsänderung aufzuweisen. Zudem ist das Bremselement 14 dazu vorgesehen, nach einem Entfernen des äußeren Reizes die Materialeigenschaftsänderung rückgängig zu machen. Das Bremselement 14 ist dazu vorgesehen, sich an seinen Ausgangszustand zu erinnern. Und zwar ist das Bremselement 14 dazu vorgesehen, nach dem Entfernen des äußeren Reizes in seinen Ausgangzustand zurückzukehren. Das magneto-rheologische Material umfasst ein magneto-rheologisches Elastomer.

Die Bremseinstelleinheit 12 ist dazu vorgesehen, den äußeren Reiz zu erzeugen. Und zwar weist die Bremseinstelleinheit 12 eine Felderzeugungseinheit 18 auf, die dazu vorgesehen ist, ein Feld zu einer Erreichung der Materialeigenschaftsänderung des Bremselements 14 zu erzeugen. Die Felderzeugungseinheit 18 ist in Fig. 2 lediglich schematisch in Form zweier Leitungselemente dargestellt. Die Felderzeugungseinheit 18 ist in dem Bremshebeleinheitengehäuse 38 angeordnet. Und zwar ist die Felderzeugungseinheit 18 an zwei einander gegenüberliegenden Seiten des Bremselements 14 angeordnet. Die Felderzeugungseinheit 18 ist an den zwei einander gegenüberliegenden Seiten des Bremselements 14 mit etwas Abstand zu dem Bremselement 14 angeordnet. Dadurch ist eine Formänderung des Bremselements 14 problemlos realisierbar. Die Felderzeugungseinheit 18 weist in einem Bereich des Bremshebelelements 40 eine Aussparung auf. Dadurch ist das Bremshebelelement 40 problemlos um die Schwenkachse 44 schwenkbar. Die Felderzeugungseinheit 18 ist dazu vorgesehen, ein magnetisches Feld zu erzeugen. Das Feld ist als das magnetische Feld ausgebildet. Die Bremseinstelleinheit 12 ist dazu vorgesehen, die Felderzeugungseinheit 18 mittels der Regeleinheit 48 zu betreiben. Die Felderzeugungseinheit 18 ist mittels einer elektrischen Leitung mit der Regeleinheit 48 verbunden. Die Felderzeugungseinheit 18 umfasst Elektromagnete, die dazu vorgesehen sind, das Feld zu erzeugen. Die Felderzeugungseinheit 18 ist dazu vorgesehen, ein homogenes Feld in dem Bremselement 14 zu erzeugen. Die Elektromagnete sind zu einer Erzeugung des homogenen Felds entsprechend jeweils mit der elektrischen Leitung verbunden. Die Bremseinstelleinheit 12 umfasst ferner einen Akkumulator, der dazu vorgesehen ist, die Bremseinstelleinheit 12 mit elektrischer Energie zu versorgen. Der Akkumulator ist in der Regeleinheit 48 integriert. Alternativ ist denkbar, dass die Bremseinstelleinheit 12 dazu vorgesehen ist, mittels eines Dynamos mit elektrischer Energie versorgt zu werden.

Es ist ein Verfahren zu einem Betreiben der Fahrzeugbremseinheit 10, bei dem das Bremselement 14 der Bremseinstelleinheit 12 durch die Materialeigenschaftsänderung den Beitrag zu der Einstellung der Bremswirkung bewirkt, vorgesehen. In einem ersten Verfahrensschritt übt der Fahrzeugführer die Bremskraft aus, indem der Fahrzeugführer das Bremshebelelement 40 betätigt. Durch die Bremskraft wird die Bremseinheit 20 aktiviert und das Fahrzeug 22 abgebremst. Misst die Radsensoreinheit 46 den Blockierfall des Rads 26, so übermittelt sie die gemessenen Daten an die Bremseinstelleinheit 12. Die Bremseinstelleinheit 12 stellt entsprechend den übermittelten Daten die Bremswirkung ein. Die Bremseinstelleinheit 12 ist dazu vorgesehen, die Bremswirkung mittels der Regeleinheit 48 in einem kontinuierlich andauernden Regelkreislauf gezielt zu regeln

## Patentansprüche

1. Fahrzeugbremseinheit, insbesondere Zweiradbremseinheit, die zumindest eine Bremseinstelleinheit (12) aufweist, die dazu vorgesehen ist, eine Bremswirkung gezielt einzustellen, wobei die Bremseinstelleinheit (12) zumindest ein Bremselement (14) aufweist, das dazu vorgesehen ist, durch zumindest eine Materialeigenschaftsänderung zumindest einen Beitrag zu einer Einstellung der Bremswirkung zu bewirken, **dadurch gekennzeichnet, dass** das Bremselement (14) in einem Bremshebeleinheitengehäuse (38) einer Bremshebeleinheit (34) angeordnet ist, wobei das Bremselement (14) zur Erzeugung einer Bremskraft vorgesehen ist.

2. Fahrzeugbremseinheit nach Anspruch 1, **dadurch gekennzeichnet, dass** die Bremseinstelleinheit (12) zumindest eine Betätigungseinheit (16) aufweist, die dazu vorgesehen ist, die Bremswirkung zumindest teilweise selbsttätig abhängig von zumindest einer Kenngröße einzustellen.

3. Fahrzeugbremseinheit nach einem der vorhergehenden Ansprüche, **dadurch gekennzeichnet, dass** die Materialeigenschaftsänderung des Bremselements (14) zumindest als eine Steifigkeitsänderung ausgebildet ist.

4. Fahrzeugbremseinheit nach einem der vorhergehenden Ansprüche, **dadurch gekennzeichnet, dass** die Bremseinstelleinheit (12) zumindest eine Felderzeugungseinheit (18) aufweist, die dazu vorgesehen ist, zumindest ein Feld zu einer Erreichung der Materialeigenschaftsänderung des Bremselements (14) zu erzeugen.

5. Fahrzeugbremseinheit nach Anspruch 4, **dadurch gekennzeichnet, dass** das Feld als ein magnetisches Feld ausgebildet ist.

6. Fahrzeugbremseinheit nach einem der vorhergehenden Ansprüche, **dadurch gekennzeichnet, dass** das Bremselement (14) zumindest ein magneto-rheologisches Material umfasst.

7. Fahrzeugbremseinheit nach Anspruch 6, **dadurch gekennzeichnet, dass** das magneto-rheologische Material zumindest ein magneto-rheologisches Elastomer umfasst.

8. Fahrzeugbremseinheit nach einem der vorhergehenden Ansprüche, **gekennzeichnet durch** zumindest eine Bremseinheit (20), die als eine Scheibenbremse ausgebildet ist.

9. Fahrzeug, insbesondere Zweirad, mit zumindest einer Fahrzeugbremseinheit (10) nach einem der Ansprüche 1 bis 8.

10. Fahrzeug nach Anspruch 9, **gekennzeichnet durch** eine Ausbildung als Fahrrad.

11. Verfahren zu einem Betreiben zumindest einer Fahrzeugbremseinheit (10) nach Anspruch 1, bei dem das Bremselement (14) der Bremseinstelleinheit (12) durch zumindest eine Materialeigenschaftsänderung zumindest einen Beitrag zu einer Einstellung der Bremswirkung bewirkt.

## Claims

1. Vehicle brake unit, in particular bicycle brake unit, which has at least one brake adjustment unit (12) which is provided for adjusting a braking action in targeted fashion, wherein the brake adjustment unit (12) has at least one brake element (14) which is provided for at least contributing to an adjustment of the braking action by way of at least one change in material characteristics, **characterized in that** the brake element (14) is arranged in a brake lever unit housing (38) of a brake lever unit (34), wherein the brake element (14) is provided for generating a braking force.

2. Vehicle brake unit according to Claim 1, **characterized in that** the brake adjustment unit (12) has at least one actuation unit (16) which is provided for adjusting the braking action at least partially autonomously in a manner dependent on at least one characteristic variable.

3. Vehicle brake unit according to one of the preceding claims, **characterized in that** the change in material characteristics of the brake element (14) is at least realized as a change in stiffness.

4. Vehicle brake unit according to one of the preceding claims, **characterized in that** the brake adjustment unit (12) has at least one field-generating unit (18) which is provided for generating at least one field for realizing the change in material characteristics of the brake element (14).

5. Vehicle brake unit according to Claim 4, **characterized in that** the field is in the form of a magnetic field.

6. Vehicle brake unit according to one of the preceding claims, **characterized in that** the brake element (14) comprises at least one magnetorheological material.

7. Vehicle brake unit according to Claim 6, **characterized in that** the magnetorheological material comprises at least one magnetorheological elastomer.

8. Vehicle brake unit according to one of the preceding claims, **characterized by** at least one brake unit (20) which is in the form of a disc brake.

9. Vehicle, in particular bicycle, having at least one vehicle brake unit (10) according to one of Claims 1 to 8.

10. Vehicle according to Claim 9, **characterized by** an embodiment as a bicycle.

11. Method for operating at least one vehicle brake unit (10) according to Claim 1, in which the brake element (14) of the brake adjustment unit (12) at least contributes to an adjustment of the braking action by way of at least one change in material characteristics.

## Revendications

1. Unité de freinage de véhicule, en particulier unité de freinage de véhicule deux-roues, comprenant au moins une unité d'ajustement du freinage (12) qui est prévue pour ajuster de manière ciblée un effet de freinage, l'unité d'ajustement de freinage (12) présentant au moins un élément de freinage (14) qui, par au moins une modification des propriétés des matériaux, est prévu pour provoquer au moins une contribution à un ajustement de l'effet de freinage, **caractérisée en ce que** l'élément de freinage (14) est disposé dans un boîtier d'unité de levier de frein (38) d'une unité de levier de frein (34), l'élément de freinage (14) étant prévu pour générer une force de freinage.

2. Unité de freinage de véhicule selon la revendication 1, **caractérisée en ce que** l'unité d'ajustement de freinage (12) présente au moins une unité d'actionnement (16) qui est prévue pour ajuster l'effet de freinage au moins en partie automatiquement en fonction d'au moins une grandeur caractéristique.

3. Unité de freinage de véhicule selon l'une quelconque des revendications précédentes, **caractérisée en ce que** la modification de la propriété des matériaux de l'élément de freinage (14) est réalisée au moins sous forme d'une modification de la rigidité.

4. Unité de freinage de véhicule selon l'une quelconque des revendications précédentes, **caractérisée en ce que** l'unité d'ajustement de freinage (12) présente au moins une unité de génération de champ (18) qui est prévue pour générer au moins un champ en vue d'obtenir la modification des propriétés des matériaux de l'élément de freinage (14).

5. Unité de freinage de véhicule selon la revendication 4, **caractérisée en ce que** le champ est réalisé sous forme de champ magnétique.

6. Unité de freinage de véhicule selon l'une quelconque des revendications précédentes, **caractérisée en ce que** l'élément de freinage (14) comprend au moins un matériau magnétorhéologique.

7. Unité de freinage de véhicule selon la revendication 6, **caractérisée en ce que** le matériau magnétorhéologique comprend au moins un élastomère magnétorhéologique.

8. Unité de freinage de véhicule selon l'une quelconque des revendications précédentes, **caractérisée par** au moins une unité de freinage (20) qui est réalisée sous forme de frein à disque.

9. Véhicule, en particulier véhicule deux-roues, comprenant au moins une unité de freinage de véhicule (10) selon l'une quelconque des revendications 1 à 8.

10. Véhicule selon la revendication 9, **caractérisé par** une réalisation en tant que bicyclette.

11. Procédé pour faire fonctionner au moins une unité de freinage de véhicule (10) selon la revendication 1, dans lequel l'élément de freinage (14) de l'unité d'ajustement de freinage (12) provoque, par au moins une modification des propriétés des matériaux, au moins une contribution à un ajustement de l'effet de freinage.
